# EUROPEAN PATENT APPLICATION

(11) **EP 3 016 390 A1**
(43) Date of publication of application: **04.05.2016**
(21) Application number: 14306713.0
(22) Date of filing: 28.10.2014
(51) Int. Cl.: H04N 19/33, H04N 19/537

(54) **Method and device for transmission of a video**

(71) Applicant: ALCATEL LUCENT, 92100 Boulogne-Billancourt (FR)
(72) Inventor: Aerts, Maarten, 2018 Antwerpen (BE); Rondao Alface, Patrice, 2018 Antwerpen (BE); Macq, Jean-François, 2018 Antwerpen (BE)
(74) Representative: ALU Antw Patent Attorneys

(57) **Abstract**

Embodiments relate to a method for encoding a video (V), executed by a source device (2), comprising encoding a current portion (Pc) of the video, by:
- determining (S2) a first observation (zₖ) by comparing a first working state (xₖ) of said current portion with said current portion (Pc),
- determining (S4) an updated first working state (xₖ') in function of the first residual (zₖ), and
- for at least one following current working state:
- determining (S6) a current working state (xₖ) in function of the updated previous working state (xₖ₋₁'),
- determining (S2) a current observation (zₖ) by comparing the current working state (xₖ) of said current portion with said current portion (Pc), and
- determining (S4) an updated current working state (xₖ') in function of the current working state (xₖ) and the current observation (zₖ).

## Description

### FIELD OF THE INVENTION

The present invention relates to the field of telecommunications. In particular, the present invention relates to methods and devices for encoding, decoding and transmission of a video.

### BACKGROUND

MPEG-family encoders predict a new frame from the old by block matching. The encoder determines motion vectors which pair the macroblocks of the new frame with the best matching macroblock (in its local neighborhood) of the previous frame. Transmission of the motion vectors from the encoder to the decoder requires bandwidth. A solution exists that eliminates having to send the motion vectors from the encoder to the decoder. The idea is to do the same block matching technique at the decoder side. Since the decoder cannot rely on the new frame to match against, the template matching method proposes not to match the macroblock itself, but rather a neighboring window of already matched and decoded pixels in the video stream. In this technique, the encoder only sends the residuals to the decoder. However, the effects of transform and quantization on the residual propagate through the prediction process and accumulate fast, yielding increasing residuals and poor compression.

### SUMMARY

It is thus an object of embodiments of the present invention to propose methods and devices for encoding, decoding and transmission of a video, which do not show the inherent shortcomings of the prior art.

Accordingly, embodiments relate to a method for encoding a video, executed by a source device, comprising encoding a current portion of the video by:
- determining a first observation by comparing a first working state of said current portion with said current portion,
- determining an updated first working state in function of the first residual, and
- for at least one following current working state:
   - determining a current working state in function of the updated previous working state,
   - determining a current observation by comparing the current working state of said current portion with said current portion, and
   - determining an updated current working state in function of the current working state and the current observation.

Correspondingly, embodiments relate to a source device for encoding a video, comprising:
- an observation module for determining a first observation by comparing a first working state of a current portion of the video with said current portion,
- an update module for determining an updated first working state in function of the first residual,
- a prediction module for determining, for at least one following current working state, a current working state in function of the updated previous working state, wherein the observation module is configured for determining a current observation by comparing the current working state of said current portion with said current portion, and the update module is configured for determining an updated current working state in function of the current working state and the current observation.

The current working state may be determined in function of the updated previous working state and a corresponding working state of at least one other portion of the video.

In some embodiments, successive working states of the current portion comprise respective versions of the current portion at increasing resolutions, and determining a current working state in function of the updated previous working state comprises:
- determining prediction data in function of a version of the current portion and a corresponding working state of the other portion comprising a version of the other portion at a first resolution, and
- determining a version of the current portion at a second resolution higher than the first resolution in function of said prediction data and a working state of the other portion comprising a version of the other portion at the second resolution.

The prediction data may comprise motion vectors or an optical flow map.

The method may comprise:
- determining an optical flow map for a current frame in function of the current frame and a pixel map of a previous frame,
- determining a predicted optical flow map for the current frame in function of optical flows maps for previous frames,
- determining said first observation by comparing said optical flow map for the current frame with said predicted optical flow map,
- determining an updated optical flow map for the current frame by updating the predicted optical flow map for the current frame in function of said first observation,
- determining a predicted pixel map by applying the updated optical flow map to the pixel map of the previous frame, and
- determining a second observation by comparing the predicted pixel map with the current frame.

In some embodiments, successive working states of the current portion comprise respective versions of the current portion at increasing resolutions, and determining a current working state in function of the updated previous working state comprises applying a resolution enhancing technique to a version of the current portion at a first resolution to determine a version of the current portion at a second resolution higher than the first resolution.

The method may comprise storing the observations and/or sending the observations to a destination device.

The current portion of the video may be for example a frame, an area of a frame or a group of frames.

Embodiments also relate to a method for decoding a video, executed by a destination device, comprising decoding a current portion of the video, by repeating the following steps for at least two successive working states of said current portion:
- obtaining an observation associated with a current working state of said current portion,
- determining an updated current working state in function of the observation,
- determining a following working state in function of the updated current working state.

Correspondingly, embodiments also relate to a destination device for decoding a video, comprising:
- means for obtaining an observation associated with a current working state of a current portion of the video,
- an update module for determining an updated current working state in function of the observation,
- a prediction module for determining a following working state in function of the updated current working state,
wherein the update module and the prediction module are configured for repeating the determining steps for at least two successive working states of said current portion.

The method may comprise receiving the observations from a source device.

Embodiments also relate to a computer program comprising instructions for performing one of the methods mentioned before when said instructions are executed by a computer.

### BRIEF DESCRIPTION OF THE DRAWINGS

The above and other objects and features of the invention will become more apparent and the invention itself will be best understood by referring to the following description of embodiments taken in conjunction with the accompanying drawings wherein:
Figure 1 is a block diagram of a system for transmission of a video,
Figure 2 is a flowchart of a method for transmission of a video, executed by the source device of Figure 1,
Figure 3 is a flowchart of a method for transmission of a video, executed by the destination device of Figure 1,
Figure 4, 5 and 6 are block diagram of elements of the source device of Figure 1, according to various embodiments, and
Figure 7 is a structural diagram of the source device or destination device of Figure 1.

### DESCRIPTION OF EMBODIMENTS

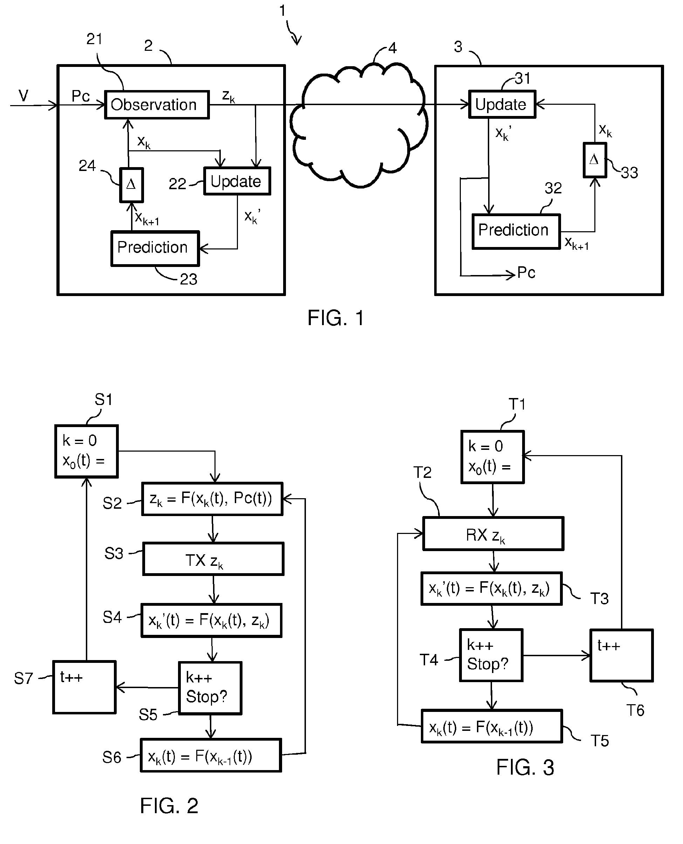

Figure 1 shows a system 1 for transmission of a video V. The system 1 comprises a source device 2 and a destination device 3. The source device 2 encodes an input video V and transmits the encoded video to the destination device 3. The input video V is for example a video captured by a camera included or connected to the source device 2. The destination device 3 receives the encoded video from the source device 2 and decodes the received video. The destination device 3 may be a final destination where the decoded video is displayed, or an intermediary node between the source device 2 and another device (not shown). The destination device 3 may store the decoded video, encoded it in another format, transmit it to another device...

In Figure 1, the source device 2 and the destination device 3 are connected by a network 4. In other embodiments, communication from the source device 2 to the destination device 3 may comprises storing data on a storage medium and transferring the storage medium from the source device 2 to the destination device 3.

The source device 2 comprises an observation module 21, an update module 22, a prediction module 23 and a delay module 24 for encoding a current portion Pc of the input video V. The current portion Pc may be for example a frame, an area of a frame, a group of frames, a moving object present in successive frames... In some embodiments, the current portion Pc is encoded without reference to another portion of the video, in other words it is intra-coded. In other embodiments, the current portion Pc is encoded with reference to one or more other portion(s) Pp, which may be for example a frame, an area of a frame, a group of frames... The other portion(s) Pp may include previous portion(s) and/or following portion(s), for example previous and following frames.

The source device 2 encodes the video V by successive update-prediction iterations of a working state xₖ associated with the current portion Pc, and determining observations zₖ. Thus, the observation module 21 compares the current portion Pc with a current working state xₖ, and determines an observation zₖ. The update module 22 determines an updated current working state xₖ' by updating the current working state xₖ in function of the observation zₖ. Then, the prediction module 23 determines a following working state xₖ₊₁ in function of the updated current working state xₖ' and, in some embodiments, of corresponding working states of the other portion(s) Pp of the video V. The delay module 24 shows that this update-prediction is repeated (at least once) for the following working state xₖ₊₁.

The functioning of the source device 2 is illustrated on Figure 2, which is a flowchart of a method for encoding a video V executed by the source device 2. Since successive portions of the video may be encoded is the same manner (for example successive frames), the following description use the symbol t to refer to the current portion Pc(t), the corresponding other portion(s) Pp(t) and working states xₖ(t).

Initially, the source device 2 initializes a counter k = 0 and an initial working state x₀(t) (Step S1). Then, the observation module 21 compares the current working state xₖ(t) with the current portion Pc(t), and determines an observation zₖ (step S2).

The source device 2 transmits the observation zₖ to the destination device 3 (Step S3). Figure 2 shows that the observation zₖ is sent immediately after being determined. However, in some embodiments, observations zₖ may be stored and sent later. For example, all observations zₖ of a current portion Pc are sent together, or all observations zₖ of the video V are stored and sent together.

Then, the update module 22 updates the current working state xₖ(t) in function of the observation zₖ (Step S4). The updated current working state is denoted xₖ'(t).

The counter k is incremented and a stop-criteria is determined (Step S5). In an example, the stop-criteria is k < K, where the limit K represents the number of iterations of the update-prediction cycle for encoding the current portion Pc, and is equal to or greater than 2. Other examples of stop-criteria include balancing the overhead of sending observation zₖ and the benefits of increasing accuracy.

If the stop-criteria is not met (k < K in the example), then the prediction module 24 determines the following state xₖ(t) (here denoted with k since the counter k has been updated at step S5) in function of the previous updated working state xₖ₋₁'(t) and, in some embodiments, of corresponding workings states of the other portion(s) Pp(t) (Step S6). Then, steps S2 to S5 are repeated for the new current working state xₖ(t).

If the stop-criteria is met (k is equal to K in the example), this means that the current portion Pc has been completely encoded by the observations zₖ, or at least encoded in a satisfactory manner. The increment of t at step S7 shows that a following portion of the video may be encoded in the same manner by repeating steps S1 to S6 for the following portion.

Various types of working states and of observation, update and prediction techniques may be used by the source device 2, and some examples are given in the embodiments described hereafter.

The source device 2 encodes a portion of a video by refining successive working states and determining corresponding observations. Since an observation is determined by comparing the current portion of the video with a current working state which is already a prediction of the current portion, the successive observations are expected to be smaller as the prediction is refined. This means that the total size of the observations determined for encoding a portion of the video may be smaller than residuals determined by only one comparison step, for example a comparison of macroblocks in the template matching technique. In other words, the source device 2 may provide a better compression gain than the template matching technique.

The destination device 3 comprises an update module 31, a prediction module 32 and a delay module 33 for decoding a current portion Pc of the video V. The current portion Pc may be decoded with or without reference to one or more other portion(s) Pp, which may include previous and/or following portion(s) of the video V, depending on the embodiments.

The destination device 3 decodes the video V by successive prediction-update iterations of a working state xₖ associated with the current portion Pc, using observations zₖ received from the source device 3. Thus, the update module 31 determines an updated current working state xₖ' by updating a current working state xₖ in function of the corresponding observation zₖ. Then, the prediction module 32 determines a following state xₖ₊₁ in function of the updated current working state xₖ'. In some embodiments, of the corresponding workings states of one or more other portion(s) Pp of the video V. The delay module 33 shows that this update-prediction is repeated (at least once) for the following working state xₖ₊₁.

The functioning of the destination device 3 is illustrated on **Figure 3****,** which is a flowchart of a method for decoding a video V executed by the destination device 3. Since successive portions of the video may be decoded is the same manner (for example successive frames), Figure 3 use the symbol t to refer to the current portion Pc(t), the corresponding other portion Pp(t) and working states xₖ(t).

Initially, the destination device 3 initializes a counter k = 0 and an initial working state x₀(t) (Step T1).

The destination device 3 receives an observation zₖ from the source device 2 (Step T2). Figure 3 shows that the observation zₖ is received individually and the working state xₖ is updated after receiving the individual observation. In other embodiments, for example, all observations zₖ of a current portion Pc are received together, or all observations zₖ of the video V are received together.

Then, the update module 31 updates the current working state xₖ(t) in function of the observation zₖ (Step T3). The updated current working state is denoted xₖ'(t).

The counter k is incremented and a stop-criteria is determined (Step T4). In the illustrated example, the stop criteria comprise comparing the counter k with a limit K, where K represents the number of iteration of the update-prediction cycle are performed for decoding the current portion Pc, and is equal to or greater than 2. Other example of stop-criteria include determining whether all received observations zₖ have been processed.

If the stop-criteria is not met (k < K in this example), then the prediction module 32 determines the following state xₖ(t) (here denoted with k since the counter k has been updated at step T4) in function of the previous updated working state xₖ₋₁'(t) and, in some embodiments, of corresponding working states of the other portion Pp(t) (Step T5). Then, steps T2 to T4 are repeated for the new current working state xₖ(t).

If the stop-criteria is met (k is equal to K in this example), this means that the current portion Pc has been completely decoded by the observations zₖ. The increment of t at step T6 shows that a following portion of the video may be decoded in the same manner by repeating steps T1 to T5 for the following portion.

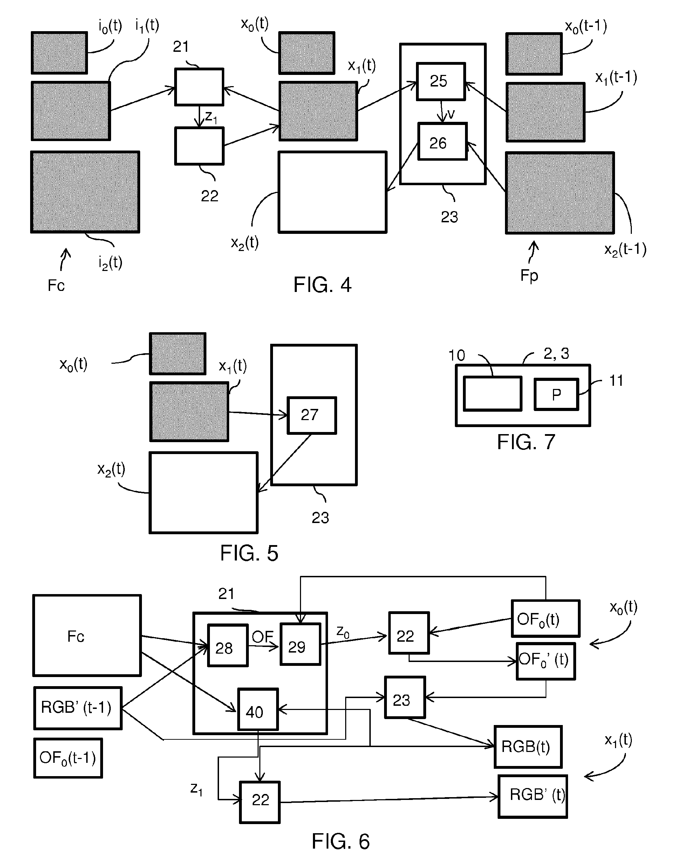

**Figure 4** shows the functioning of the source device 2, in an embodiment wherein the current portion Pc is a current frame Fc, the other portion Pp is a previous frame Fp, and the working states xₖ(t) correspond to the current frame at increasing resolutions.

In the illustrated example, the working state x₀(t) comprises a low resolution version of the current frame Fc, the working state x₁(t) comprises a medium resolution version of the current frame Fc, and the working state x₂(t) comprises a full resolution version of the current frame Fc. In other embodiments, there could be more resolution levels. Correspondingly, the current frame Fc has a low resolution version i₀(t), a medium resolution version i₁(t) and a full resolution version i₂(t), and the previous frame Fp has a low resolution version x₀(t-1), a medium resolution version x₁(t-1) and a full resolution version x₂(t-1). The working states x₀(t-1), x₁(t-1) and x₂(t-1) of the previous frame Fp may have been determined as will be described hereafter for the working states x₀(t), x₁(t) and x₂(t) when processing the previous frame Fp.

The prediction module 23 comprises a matching module 25 and a wrapping module 26.

At the beginning, the working state x₀(t) is initialized, for example as en empty low resolution frame. Then, for the successive working state xₖ(t):
- The observation module 21 determines the observation zₖ in function of the difference between the working state xₖ(t) and the corresponding version iₖ(t) of the current frame Fc : *zₖ =* └*T*(*iₖ*(*t*)-*xₖ*(*t*))/*q*┘*,* where T and /q represent transformation and quantization operations, respectively.
- The update module 22 updates the working state xₖ by adding the residual zₖ: xₖ(t) += T⁻¹ q zₖ, where T⁻¹ and q represent the inverse transformation and scaling operations.
- The matching module 23 determines prediction data v by comparing the updated working state xₖ(t) with the corresponding state xₖ(t-1) of the previous frame Fp. The prediction data v comprises for example motion vectors determined by matching macroblocks of the updated working state xₖ(t) with macroblocks of the corresponding state xₖ(t-1), or a optical flow map determined by comparing xₖ(t) and xₖ(t-1).
- The wrapping module 26 applies the prediction data v to the following working state xₖ₊₁(t-1) to determine xₖ₊₁(t). Thus, in the case of motion vectors, the motion vectors determined by matching at a resolution level are used for moving macroblocks at the higher resolution level. In the case of an optical flow map, the optical flow map determined at a resolution level is interpolated to the higher resolution level.

Figure 4 shows the working data of the source device 2 at a time where k=1: the working states x₀(t) and x₁(t) have already been updated and are shown in grey. The prediction module 23 is about to determine the working state x₂(t) in function of x₁(t), x₁(t-1) and x₂(t-1), and x₂(t) is shown empty.

In the destination device 3, the update module 31 and the prediction module 32 use the same technique to update and predict the successive working states xₖ(t). The updated working state x₂(t) correspond to the decoded current frame Fc at full resolution.

**Figure 5** shows the functioning of the source device 2, in an embodiment wherein the current portion Pc is a current frame Fc, and the working states xₖ(t) correspond to the current frame Fc at increasing resolutions, similarly to the embodiment of Figure 4. The prediction module 23 comprises an adaptive filter 27.

The adaptive filter 27 determines a working state xₖ(t) at a higher resolution by enhancing the resolution of the working state xₖ₋₁(t) at a lower resolution. Technique used by the adaptive filter 27 may comprise wavelet decomposition, super-resolution, edge-preserving deblocking filter, motion compensated regularization, etc. Depending on the resolution enhancing technique used, the adaptive filter 27 may determines the working state xₖ(t) in function of the working state xₖ₋₁(t) with or without reference to corresponding working states of one or more previous or following frames.

Figure 5 shows the working data of the source device 2 at a time where k=1: the working states x₀(t) and x₁(t) have already been updated and are shown in grey. The prediction module 23 is about to determine the working state x₂(t) by increasing the resolution of x₁(t), and x₂(t) is shown empty.

In the destination device 3, the prediction module 32 use the same technique to increase the resolution of the successive working states xₖ(t). The updated working state x₂(t) correspond to the decoded current frame Fc at full resolution.

In some embodiments, the prediction module 23 combines various of the techniques described with reference to Figures 4 and 5.

**Figure 6** shows the functioning of the source device 2, in an embodiment wherein the working states xₖ of the current frame Fc include a state x₀ which include an optical flow map, denoted OF₀(t) for the predicted state x₀ and OF'₀(t) for the updated state x'₀, and a state x₁ which include a pixel map, denoted RGB(t) for the predicted state x₁ and RGB'₀(t) for the updated state x'₁, of the current frame Fc. The working data also comprise corresponding states for previous frames, of which OF'₀(t-1) and RGB'(t-1) are shown of Figure 6.

The observation module 21 comprises an optical flow map determination module 28, a optical flow map comparator 29 and a pixel map comparator 40.

At the beginning, the working state x₀ is initialized by determining a prediction of the optical flow map OF₀(t), for example by regression and extrapolation of the optical flow maps OF₀(t-1), OF₀(t-2)... for previous frames. The optical flow map determination module 28 determines a ground truth optical flow map OF by comparing the current frame Fc and the pixel map RGB'(t-1) of the previous frame Fp. Then, the optical flow map comparator 29 determines an observation z₀ by comparing the ground truth optical flow map OF and the prediction of the optical flow map OF₀(t). The update module 22 (shown in two parts here) updates the working state x₀ by adding-in the observation z₀ to prediction of the optical flow map OF₀, thereby determining an updated optical flow map OF₀'.

Then, the prediction module 23 applies the updated optical flow map OF₀'(t) to the pixel map RGB'(t-1) of the previous frame Fp, thereby determining the pixel map RGB(t) of the working state x₁. The pixel map comparator 40 determines an observation z₁ by comparing the pixel map RGB(t) with the current frame Fc, and the update module 22 updates the working state x₁ by adding the observation z₁ to the pixel map RGB(t), thereby determining an updated pixel map RGB'(t).

In the destination device 3, corresponding working states x₀ and x₁ are initialized, updated and predicted similarly in function of the received observations z₀ and z₁. The updated pixel map RGB'(t) of the working state x₁ corresponds to the decoded current frame Fc.

Other techniques that may be used by the prediction modules 23 and 32 for determining a working state xₖ in function of a working state xₖ₋₁ and, the case may be, of corresponding working states of other portion(s) Pp of the video V include predictions based on particle video, appearance models, implicit surfaces,...

In some case, a satisfactory prediction of working states xₖ may be determined in function of corresponding working states of other portions Pp without requiring an updated working states xₖ₋₁. Accordingly, in some embodiments, the source device 3 does not transmit observations zₖ for some current portions Pc, thereby saving bandwidth. For example, the source device 2 sends observations zₖ for one frame every 3 to 5 frames. Also, in some embodiments, in case the destination device 3 does not receive some of the observations zₖ, for example due to packet loss, no retransmission is requested and the working states xₖ are predicted without the observations zₖ. This error concealment technique also save bandwidth.

Another application of such prediction modules 23 and 32 is zero-delay transmission of a real time video stream: The destination device 3 may predict a current frame Fc in function of previous frames Fp, and display the predicted current frame before receiving the corresponding residuals. When the residuals are finally received, the current frame Fc is decoded and used for predicting following frames.

**Figure 7** is a structural view of a communication device, which may be the source device 2 or the destination device 3. The communication device comprises a processor 10 and a memory 11. The memory 11 stores a computer program P which, when executed by the processor 10, cause the source device 2, respectively the destination device 3, to execute the method described above with reference to Figure 2, respectively Figure 3.

It is to be remarked that the functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared, for example in a cloud computing architecture. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts represents various processes which may be substantially represented in computer readable medium and so executed by a computer or processor, whether or not such computer or processor is explicitly shown.

Embodiments of the method can be performed by means of dedicated hardware and/of software or any combination of both.

While the principles of the invention have been described above in connection with specific embodiments, it is to be clearly understood that this description is made only by way of example and not as a limitation on the scope of the invention, as defined in the appended claims.

## Claims

1. Method for encoding a video (V), executed by a source device (2), comprising encoding a current portion (Pc) of the video by:
- determining (S2) a first observation (zₖ) by comparing a first working state (xₖ) of said current portion with said current portion (Pc),
- determining (S4) an updated first working state (xₖ') in function of the first residual (zₖ), and
- for at least one following current working state:
- determining (S6) a current working state (xₖ) in function of the updated previous working state (xₖ₋₁'),
- determining (S2) a current observation (zₖ) by comparing the current working state (xₖ) of said current portion with said current portion (Pc), and
- determining (S4) an updated current working state (xₖ') in function of the current working state (xₖ) and the current observation (zₖ).

2. Method according to claim 1, wherein said current working state (xₖ) is determined in function of the updated previous working state (xₖ₋₁') and a corresponding working state of at least one other portion (Pp) of the video.

3. Method according to claim 2, wherein successive working states of the current portion comprise respective versions of the current portion at increasing resolutions, and determining (S6) a current working state (xₖ) in function of the updated previous working state (xₖ₋₁') comprises:
- determining prediction data (v) in function of a version of the current portion and a corresponding working state of the other portion comprising a version of the other portion at a first resolution, and
- determining a version of the current portion at a second resolution higher than the first resolution in function of said prediction data and a working state of the other portion comprising a version of the other portion at the second resolution.

4. Method according to claim 3, wherein said prediction data (v) comprise motion vectors or an optical flow map.

5. Method according to claim 2, comprising:
- determining an optical flow map (OF) for a current frame (Fc) in function of the current frame (Fc) and a pixel map (RGB'(t-1)) of a previous frame,
- determining a predicted optical flow map (OF₀(t)) for the current frame in function of optical flows maps (OF₀(t-1)) for previous frames,
- determining said first observation (z₀) by comparing said optical flow map (OF₀(t)) for the current frame with said predicted optical flow map (OF),
- determining an updated optical flow map (OF₀'(t)) for the current frame by updating the predicted optical flow map (OF₀(t)) for the current frame in function of said first observation,
- determining a predicted pixel map (RGB(t)) by applying the updated optical flow map (OF₀'(t)) to the pixel map (RGB'(t-1)) of the previous frame, and
- determining a second observation (z₁) by comparing the predicted pixel map (RGB(t)) with the current frame.

6. Method according to one of claims 1 or 2, wherein successive working states of the current portion comprise respective versions of the current portion at increasing resolutions, and determining (S6) a current working state (xₖ) in function of the updated previous working state (xₖ₋₁') comprises applying a resolution enhancing technique to a version of the current portion at a first resolution to determine a version of the current portion at a second resolution higher than the first resolution.

7. Method according to one of claims 1 to 6, comprising storing the observations (zₖ) and/or sending (S3) the observations (zₖ) to a destination device (3).

8. Method according to one of claims 1 to 7, wherein said current portion of the video is a frame, an area of a frame or a group of frames.

9. Computer program (P) comprising instructions for performing the method according to one of claims 1 to 8 when said instructions are executed by a computer.

10. Source device (2) for encoding a video (V), comprising:
- an observation module (21) for determining a first observation (zₖ) by comparing a first working state (xₖ) of a current portion of the video with said current portion (Pc),
- an update module (22) for determining an updated first working state (xₖ') in function of the first residual (zₖ),
- a prediction module (23) for determining, for at least one following current working state, a current working state (xₖ) in function of the updated previous working state (xₖ₋₁'), wherein the observation module (21) is configured for determining a current observation (zₖ) by comparing the current working state (xₖ) of said current portion with said current portion (Pc), and the update module (22) is configured for determining an updated current working state (xₖ') in function of the current working state (xₖ') and the current observation (zₖ).

11. Method for decoding a video (V), executed by a destination device (3), comprising decoding a current portion (Pc) of the video, by repeating the following steps for at least two successive working states of said current portion:
- obtaining (T2) an observation (zₖ) associated with a current working state (xₖ) of said current portion,
- determining (T3) an updated current working state (xₖ') in function of the observation (zₖ),
- determining (T5) a following working state (xₖ₊₁) in function of the updated current working state (xₖ').

12. Method according to claim 11, comprising receiving the observations (zₖ) from a source device (2).

13. Method according to one of claims 11 to 12, wherein said current portion of the video is a frame, an area of a frame or a group of frames.

14. Computer program (P) comprising instructions for performing the method according to one of claims 11 to 13 when said instructions are executed by a computer.

15. Destination device (3) for decoding a video (V), comprising:
- means (10, 11) for obtaining (T2) an observation (zₖ) associated with a current working state (xₖ) of a current portion of the video,
- an update module (31) for determining an updated current working state (xₖ') in function of the observation (zₖ),
- a prediction module (32) for determining a following working state (xₖ₊₁) in function of the updated current working state (xₖ'),
wherein the update module and the prediction module are configured for repeating the determining steps for at least two successive working states of said current portion.

## Amended claims

### Amended claims in accordance with Rule 137(2) EPC.

1. Method for encoding a video (V), executed by an encoding device (2), comprising encoding a current portion (Pc) of the video associated with successive working states, wherein the successive working states comprise respective predictions of the current portion at increasing resolutions, comprising:
- determining (S2) a first observation (zₖ) in function of a difference between a first working state (xₖ) of said current portion and said current portion (Pc),
- determining (S4) an updated first working state (xₖ') in function of the first observation (zₖ), and
- for at least one following current working state:
- determining (S6) a current working state (xₖ) in function of the updated previous working state (xₖ₋₁'),
- determining (S2) a current observation (zₖ) in function of a difference between the current working state (xₖ) of said current portion and said current portion (Pc), and
- determining (S4) an updated current working state (xₖ') in function of the current working state (xₖ) and the current observation (zₖ),
- storing the observations (zₖ) and/or sending (S3) the observations (zₖ) to a decoding device (3).

2. Method according to claim 1, wherein said current working state (xₖ) is determined in function of the updated previous working state (xₖ₋₁') and a corresponding working state of at least one other portion (Pp) of the video.

3. Method according to claim 2, wherein determining (S6) a current working state (xₖ) in function of the updated previous working state (xₖ₋₁') comprises:
- determining prediction data (v) in function of a version of the current portion and a corresponding working state of the other portion comprising a version of the other portion at a first resolution, and
- determining a version of the current portion at a second resolution higher than the first resolution in function of said prediction data and a working state of the other portion comprising a version of the other portion at the second resolution.

4. Method according to claim 3, wherein said prediction data (v) comprise motion vectors or an optical flow map.

5. Method according to one of claims 1 or 2, wherein determining (S6) a current working state (xₖ) in function of the updated previous working state (xₖ₋₁') comprises applying a resolution enhancing technique to a version of the current portion at a first resolution to determine a version of the current portion at a second resolution higher than the first resolution.

6. Method according to one of claims 1 to 5, wherein said current portion of the video is a frame, an area of a frame or a group of frames.

7. Computer program (P) comprising instructions for performing the method according to one of claims 1 to 6 when said instructions are executed by a computer.

8. Encoding device (2) for encoding a video (V), wherein a current portion of the video is associated with successive working states, wherein the successive working states comprise respective predictions of the current portion at increasing resolutions, the encoding device comprising:
- an observation module (21) for determining a first observation (zₖ) in function of a difference between a first working state (xₖ) of the current portion of the video and said current portion (Pc), - an update module (22) for determining an updated first working state (xₖ') in function of the first observation (zₖ),
- a prediction module (23) for determining, for at least one following current working state, a current working state (xₖ) in function of the updated previous working state (xₖ₋₁'), wherein the observation module (21) is configured for determining a current observation (zₖ) in function of a difference between the current working state (xₖ) of said current portion and said current portion (Pc), and the update module (22) is configured for determining an updated current working state (xₖ') in function of the current working state (xₖ') and the current observation (zₖ)
- means for storing the observations (zₖ) and/or sending the observations (zₖ) to a decoding device (3).

9. Method for decoding a video (V), executed by a decoding device (3), comprising decoding a current portion (Pc) of the video associated with successive working states, wherein the successive working states comprise respective predictions of the current portion at increasing resolutions, the method comprising repeating the following steps for at least two successive working states of said current portion:
- obtaining (T2) an observation (zₖ) associated with a current working state (xₖ) of said current portion,
- determining (T3) an updated current working state (xₖ') in function of the observation (zₖ),
- determining (T5) a following working state (xₖ₊₁) in function of the updated current working state (xₖ').

10. Method according to claim 9, comprising receiving the observations (zₖ) from an encoding device (2).

11. Method according to one of claims 9 to 10, wherein said current portion of the video is a frame, an area of a frame or a group of frames.

12. Computer program (P) comprising instructions for performing the method according to one of claims 9 to 11 when said instructions are executed by a computer.

13. Decoding device (3) for decoding a video (V), comprising:
- means (10, 11) for obtaining (T2) an observation (zₖ) associated with a current working state (xₖ) of a current portion of the video associated with successive working states, wherein the successive working states comprise respective predictions of the current portion at increasing resolutions,
- an update module (31) for determining an updated current working state (xₖ') in function of the observation (zₖ),
- a prediction module (32) for determining a following working state (xₖ₊₁) in function of the updated current working state (xₖ'),
wherein the update module and the prediction module are configured for repeating the determining steps for at least two successive working states of said current portion.
